Europäisches Patentamt

European Patent Office

Office européen des brevets

(19)

(11) Numéro de publication : **0 466 571 A1**

## (12) DEMANDE DE BREVET EUROPEEN

(21) Numéro de dépôt : 91401895.7

(51) Int. Cl.⁵ : **B60H 1/00,** F04D 29/62

(22) Date de dépôt : **09.07.91**

(30) Priorité : **11.07.90 FR 9008849**

(43) Date de publication de la demande :
**15.01.92 Bulletin 92/03**

(84) Etats contractants désignés :
**DE GB IT**

(71) Demandeur : **VALEO THERMIQUE HABITACLE**
**8, rue Louis-Lormand, La Verriere**
**F-78320 Le Mesnil-Saint-Denis (FR)**

(72) Inventeur : **Becquerel, Michel**
**23, Avenue de Sully**
**F-78320 Le Mesnil-Saint-Denis (FR)**

(74) Mandataire : **Gamonal, Didier et al**
**Société VALEO Service Propriété Industrielle**
**30, rue Blanqui**
**F-93406 Saint Ouen (FR)**

(54) **Dispositif de pulseur d'air pour une installation de chauffage-ventilation d'un véhicule automobile.**

(57)    Le dispositif de pulseur d'air comprend un boîtier (12) comportant une paroi inférieure (14), une paroi supérieure (16) et deux parois latérales opposées (18,20) propres à définir ensemble deux faces d'extrémité, ouvertes et opposées, de même contour, et un cadre d'accostage (26), ainsi qu'un pulseur d'air propre à être logé dans le boîtier et comportant une turbine (34), un moteur d'entraînement (36) et deux demi-coquilles de forme symétrique (38 et 40) propres à être réunies entre elles pour loger la turbine et le moteur.
Le dispositif peut être réalisé suivant deux configurations différentes selon qu'il est destiné à un véhicule à conduite à droite ou à un véhicule à conduite à gauche.

EP 0 466 571 A1

FIG.5

L'invention concerne un dispositif de pulseur d'air pour une installation de chauffage-ventilation d'un véhicule automobile.

Les installations de ce type comprennent un pulseur d'air propre à prélever de l'air extérieur ou de l'air recyclé et à envoyer de l'air pulsé vers un boîtier de distribution qui comporte des moyens de réchauffage d'air et des volets de distribution pour répartir l'air pulsé, éventuellement réchauffé, à l'intérieur de l'habitacle.

Le pulseur comprend une enceinte en forme de volute, équipée d'une turbine actionnée par un moteur électrique, et munie d'une entrée d'air pour l'air extérieur ou recyclé et d'une sortie d'air pour l'air pulsé, cette sortie étant raccordée au boîtier de distribution par un canal approprié qui peut être muni intérieurement d'un évaporateur, si l'installation permet également la climatisation.

Une installation de ce type est connue, notamment d'après la demande de brevet japonais No 54-138 238.

Les véhicules construits en grande série sont prévus pour être disponibles aussi bien en conduite à droite, c'est-à-dire avec le volant à droite, qu'en conduite à gauche, c'est-à-dire avec le volant à gauche. Pour des raisons d'implantation sous le capot du véhicule, il est généralement nécessaire de prévoir que le pulseur soit disposé du côté opposé à la conduite, c'est-à-dire du côté droit si la conduite est à gauche et inversement.

Ceci oblige à prévoir des pulseurs spécifiquement adaptés au côté de la conduite, c'est-à-dire deux types de pulseurs ayant des formes généralement symétriques, l'un par rapport à l'autre.

L'invention a notamment pour but de remédier à cet inconvénient.

Elle propose à cet effet un dispositif de pulseur d'air pour une installation de chauffage-ventilation d'un véhicule automobile qui comprend :

– un pulseur d'air propre à être logé dans un boîtier et comportant une turbine, un moteur d'entraînement de la turbine et deux demi-coquilles de forme symétrique, propres à être réunies entre elles pour former une volute logeant la turbine et le moteur, chaque demi-coquille ayant une ouverture centrale et une demi-ouverture latérale, de sorte que l'une des ouvertures centrales sert d'entrée d'air et l'autre de support au moteur, tandis que les deux demi-ouvertures latérales forment ensemble une sortie d'air; et

– un boîtier comportant une paroi inférieure, une paroi supérieure et deux parois latérales opposées propres à définir ensemble deux faces d'extrémité ouvertes et opposées ayant le même contour et un cadre d'accostage présentant deux côtés d'accostage opposés et symétriques par rapport à un plan, de sorte que le cadre d'accostage peut s'adapter sur la sortie d'air du pulseur d'air par l'un ou l'autre de ses côtés d'accostage, ce qui permet d'obtenir deux configurations de boîtier dans lesquelles le cadre d'accostage conserve la même orientation spatiale par rapport au boîtier.

Ainsi, à partir des mêmes éléments, il est possible de réaliser deux dispositifs de configurations généralement symétriques permettant une adaptation respectivement à un véhicule à conduite à droite et à un véhicule à conduite à gauche.

Selon une autre caractéristique de l'invention, les mêmes deux demi-coquilles sont utilisables dans l'une ou l'autre des deux configurations du boîtier en changeant leur orientation de 180° pour passer d'une configuration à une autre, l'ouverture de la demi-coquille, qui sert d'entrée d'air dans l'une des deux configurations, servant de support moteur dans l'autre configuration, et inversement.

De cette manière, dans les deux configurations, l'entrée d'air de la volute et le support moteur conservent leur même orientation spatiale par rapport au boîtier.

Selon une autre caractéristique de l'invention, le cadre d'accostage comprend une âme dont dépendent, sur chacun de ses côtés d'accostage, deux lèvres périphériques distantes l'une de l'autre.

Selon une autre caractéristique de l'invention, chaque demi-coquille comprend un tronçon de paroi disposé du côté opposé à la demi-ouverture latérale, de sorte que, lorsque les deux demi-coquilles sont réunies, les deux tronçons de paroi forment ensemble une paroi se raccordant avec la paroi inférieure, la paroi supérieure et les deux parois latérales du boîtier.

Selon une autre caractéristique de l'invention, l'une des deux parois latérales du boîtier comporte une entrée d'air pour l'admission d'air recyclé, tandis que la paroi de fond comprend au moins une entrée d'air pour l'admission d'air recyclé.

Avantageusement, la paroi supérieure du boîtier comprend au moins une entrée d'air pour l'admission d'air extérieur.

Cette paroi supérieure peut exister en deux versions différentes correspondant respectivement aux deux configurations du boîtier.

Dans la description qui suit, donnée seulement à titre d'exemple, on se réfère aux dessins annexés sur lesquels :

– la figure 1 est une vue schématique de dessus d'un dispositif de pulseur d'air selon l'invention, dans une configuration correspondant à une conduite à droite :

– la figure 2 est une vue schématique de dessus du même dispositif dans une autre configuration correspondant à une conduite à gauche ;

– la figure 3 est une vue schématique en coupe selon la ligne III-III de la figure 1 ;

– la figure 4 est une vue schématique en coupe selon la ligne IV-IV de la figure 2 ;

– la figure 5 est une vue en perspective éclatée d'un dispositif de pulseur d'air selon l'invention, dans une configuration correspondant à une conduite à droite ;

– la figure 6 est une vue en perspective éclatée du dispositif de la figure 5 dans une autre configuration correspondant à une conduite à gauche ;

– la figure 7 est une vue en élévation du cadre d'accostage du dispositif des figures 5 et 6 ;

– la figure 8 est une vue latérale du cadre d'accostage de la figure 7 ; et

– la figure 9 est une vue en coupe selon la ligne IX-IX de la figure 7.

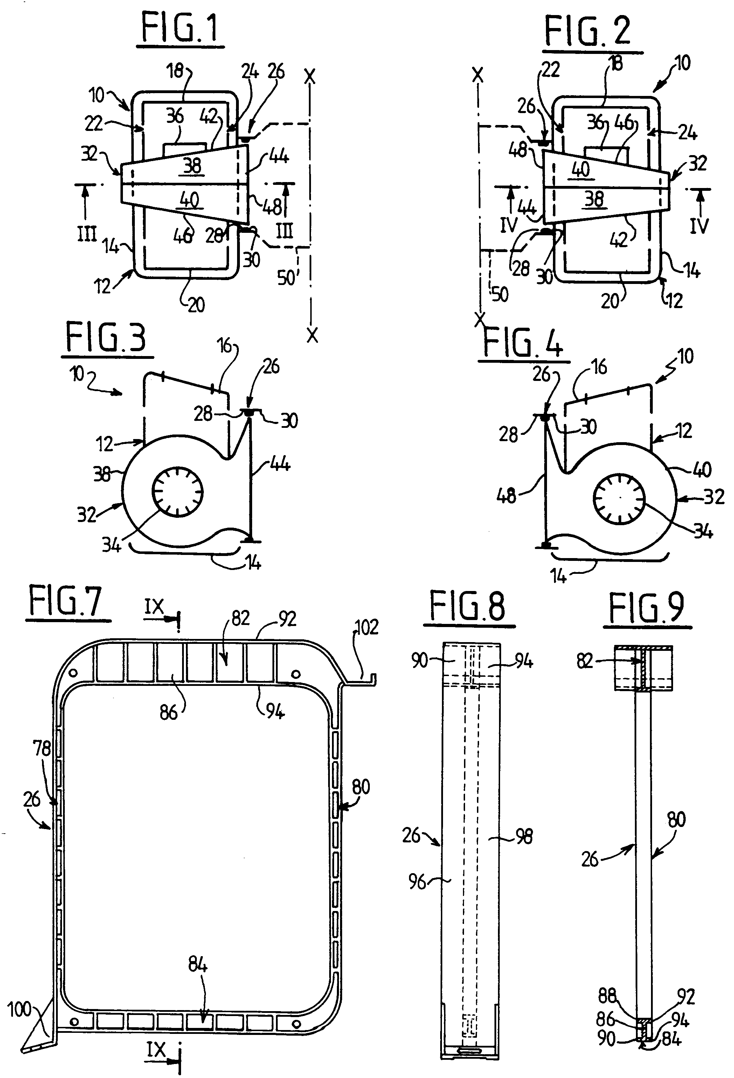

On se réfère tout d'abord à la figure 1 qui montre un dispositif de pulseur 10 selon l'invention, propre à être implanté du côté gauche d'un véhicule d'axe longitudinal XX, la conduite du véhicule étant disposée du côté droit.

Le dispositif de pulseur 10 comprend (figures 1 et 3) un boîtier 12 comportant une paroi inférieure 14, une paroi supérieure 16 et deux parois latérales opposées 18,20, les parois 14,16,18 et 20 définissant ensemble deux faces d'extrémité 22 et 24, ouvertes et opposées, ayant le même contour, dans l'exemple un contour de forme générale rectangulaire.

Le boîtier comprend en outre un cadre d'accostage 26 présentant deux côtés d'accostage 28,30, opposés et symétriques par rapport au plan général du cadre 26.

Le dispositif 10 comprend en outre (figures 1 et 3) un pulseur d'air 32 propre à être logé à l'intérieur du boîtier et comportant une turbine 34 entraînée par un moteur 36. La turbine et son moteur sont logés à l'intérieur de deux demi-coquilles 38,40 de forme symétrique, propres à être réunies entre elles pour constituer une enceinte en forme de volute. La demi-coquille 38 comporte une ouverture centrale 42 et une demi-ouverture latérale 44 et, de façon correspondante, la demi-coquille 40 comporte une ouverture centrale 46 et une demi-ouverture latérale 48.

Dans la configuration des figures 1 et 3, l'ouverture 42 sert de support au moteur 36, tandis que l'ouverture 46 sert d'entrée d'air, alors que dans la configuration des figures 2 et 4, l'ouverture 42 sert d'entrée d'air et l'ouverture 46 sert de support au moteur 36.

Dans les deux configurations, les deux demi-ouvertures 44 et 48 sont réunies entre elles pour former une sortie d'air, de contour général rectangulaire, propre à s'adapter contre le cadre d'accostage 26.

A cet effet, le cadre d'accostage 26 a sensiblement le même contour que les deux demi-ouvertures 44 et 48 réunies si bien qu'il peut s'adapter sur ces demi-ouvertures par l'un ou l'autre de ses côtés d'accostage, ce qui permet d'obtenir deux configurations de boîtier différentes.

Dans la configuration de la figure 1, le cadre d'accostage 26 s'adapte par son côté 28 sur les demi-ouvertures 44 et 48, tandis que, dans la configuration de la figure 2, il s'adapte par son côté 30 sur ces demi-ouvertures.

On remarquera par conséquent que, pour passer de la configuration de la figure 1 à celle de la figure 2, les parois 14,16,18 et 20 n'ont pas changé tandis que le cadre 26 a subi simplement une translation, tout en conservant la même orientation spatiale par rapport au boîtier 12.

Par contre, pour passer d'une configuration à l'autre du boîtier, les deux demi-coquilles 38 et 40 doivent subir une rotation de 180°. Les rôles respectifs des deux demi-coquilles 38 et 40 sont alors inversés puisque l'ouverture qui servait de support au moteur dans une configuration sert d'entrée d'air dans l'autre configuration, et inversement.

Ceci permet de conserver toujours la même orientation générale, étant donné que, dans les deux configurations, le moteur 36 est toujours du côté de la paroi 18 et l'entrée d'air toujours du côté de la paroi 20.

Le côté d'accostage du cadre 26, dirigé vers l'extérieur du boîtier (côté 30 dans la figure 1 et côté 28 dans la figure 2) permet de relier le dispositif 10 à un canal 50 représenté schématiquement en trait fantôme.

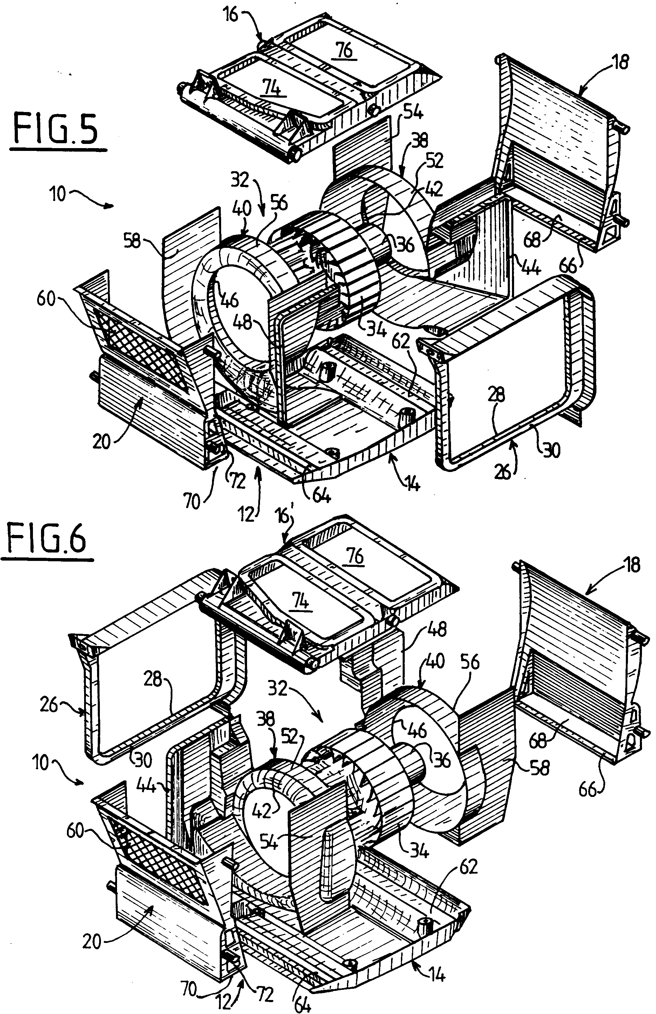

On se réfère maintenant aux figures 5 et 6 qui montrent un dispositif de pulseur 10 dans deux configurations différentes correspondant respectivement à celles des figures 1 et 2, les parties constitutives du dispositif étant désignées par les mêmes références numériques que dans le cas des figures 1 à 4.

Comme montré aux figures 5 et 6, chacune des demi-coquilles 38 et 40 est formée d'une seule pièce, avantageusement par moulage d'une matière plastique. La demi-coquille 38 comprend une partie 52 en forme de demi-volute qui ménage l'ouverture 42 et dont dépendent, d'un côté, la demi-ouverture 44 et, du côté opposé, un tronçon de paroi 54. De la même manière, la demi-coquille 40 comprend une partie 56 en forme de demi-volute qui ménage l'ouverture 46 et dont dépendent, d'un côté, la demi-ouverture 48 et, du côté opposé, un tronçon de paroi 58. Lorsque les demi-coquilles 38 et 40 sont réunies, les tronçons de parois 54 et 58 forment ensemble une paroi se raccordant avec la paroi inférieure 14, la paroi supérieure 16 et les parois latérales 18 et 20. Ces différentes parois sont propres à s'emboîter par tout moyen approprié pour constituer ainsi un boîtier étanche dans lequel est placé le pulseur 32 résultant de l'assemblage des demi-coquilles 38 et 40 avec la turbine 34 et son moteur 36.

Comme montré aux figures 5 et 6, la paroi latérale 20 comprend une entrée d'air 60 pour l'admission d'air recyclé.

La paroi de fond 14 comprend deux entrées d'air 62 et 64, de forme allongée, pour l'admission d'air recyclé.

La paroi 18 comprend, à sa partie inférieure, un rebord 66 muni d'une ouverture allongée 68 propre à correspondre avec l'ouverture 62 de la paroi de fond 14, lorsque les parois 14 et 18 sont assemblées. De la même manière, la paroi 20 comprend, à sa partie inférieure, un rebord 70 muni d'une ouverture allongée 72 propre à correspondre avec l'ouverture 64 de la paroi de fond 14 lorsque les parois 20 et 14 sont assemblées.

La paroi supérieure 16 comprend deux entrées d'air 74 et 76 pour permettre l'admission d'air extérieur.

L'air qui pénètre ainsi dans le boîtier par les entrées d'air 60,62,64,74 et 76 est aspiré par le pulseur 32 pour être pulsé à travers l'ouverture de sortie formée par la réunion des deux demi-ouvertures 44 et 48. Cet air est ensuite envoyé vers le dispositif de distribution du véhicule (non représenté) via le canal 50.

Bien que, dans certains cas, la paroi supérieure 16 puisse être utilisée dans les deux configurations, on préfère, conformément aux figures 5 et 6, prévoir deux pièces de forme générale symétrique, à savoir une paroi 16, dans le cas de la figure 5, et une paroi 16', dans le cas de la figure 6.

On se réfère maintenant aux figures 7 à 9 pour décrire plus particulièrement la structure du cadre d'accostage 26.

Le cadre 26 a une forme générale rectangulaire définie par deux barrettes longitudinales 78 et 80 réunies entre elles par deux barrettes transversales 82 et 84. Le cadre 26 comprend une âme plane 86 dont dépendent, sur son côté d'accostage 28, deux lèvres périphériques 88 et 90, distantes l'une de l'autre, et, sur son côté d'accostage 30, deux lèvres périphériques 92 et 94 également distantes l'une de l'autre et correspondant, de façon symétrique, aux lèvres 88 et 90. Les lèvres 88 et 92 sont situées à l'intérieur par rapport aux lèvres 90 et 94. Toutes ces lèvres ont sensiblement la même hauteur. Toutefois, les lèvres 90 et 94 comportent respectivement des parties de plus grande hauteur 96 et 98 sur un demi-pourtour, pour raccorder deux pattes de fixation 100 et 102, situées aux extrémités d'une diagonale du rectangle.

Le cadre 26 comporte ainsi une forme générale symétrique par rapport au plan défini par l'âme 86, si bien qu'il peut être utilisé indifféremment dans les deux configurations représentées aux figures 5 et 6. Dans la configuration de la figure 5, le côté d'accostage 28 coopère avec le boîtier et le côté d'accostage 30 avec le canal 50, tandis que, dans la configuration de la figure 6, c'est la disposition inverse.

Tous les éléments constitutifs du dispositif de pulseur d'air, à l'exception du moteur, peuvent être réalisés par moulage d'une matière plastique et être ensuite assemblées entre eux par tout moyen approprié.

## Revendications

1. - Dispositif de pulseur d'air pour une installation de chauffage-ventilation d'un véhicule automobile, caractérisé en ce qu'il comprend :
   – un pulseur d'air (32) propre à être logé dans un boîtier (12) et comportant une turbine (34), un moteur (36) d'entraînement de la turbine et deux demi-coquilles (38,40) de forme générale symétrique, propres à être réunies entre elles pour former une volute logeant la turbine (34) et le moteur (36), chaque demi-coquille (38,40) ayant une ouverture centrale (42,46) et une demi-ouverture latérale (44,48), de sorte que l'une des ouvertures centrales sert d'entrée d'air et l'autre de support au moteur, tandis que les deux demi-ouvertures latérales (44,48) forment ensemble une sortie d'air; et
   – un boîtier (12) comportant une paroi inférieure (14), une paroi supérieure (16) et deux parois latérales opposées (18,20) propres à définir ensemble deux faces d'extrémité (22,24), ouvertes et opposées, ayant le même contour et un cadre d'accostage (26) présentant deux côtés d'accostage (28,30), opposés et symétriques par rapport à un plan, de sorte que le cadre d'accostage (26) peut s'adapter sur la sortie d'air (44, 48) du pulseur d'air (32) par l'un ou l'autre de ses côtés d'accostage (28,30), ce qui permet d'obtenir deux configurations de boîtier dans lesquelles le cadre d'accostage (26) conserve la même orientation spatiale par rapport au boîtier.

2. - Dispositif selon la revendication 1, caractérisé en ce que les mêmes deux demi-coquilles (38,40) sont utilisables dans l'une ou l'autre des deux configurations du boîtier (12) en changeant leur orientation de 180° pour passer d'une configuration à l'autre et en ce que l'ouverture (42,46) de la demi-coquille (38,40) qui sert d'entrée d'air dans l'une des deux configurations du boîtier sert de support au moteur (36) dans l'autre configuration et inversement.

3. - Dispositif selon la revendication 1, caractérisé en ce que le cadre d'accostage (26) comprend une âme (86) dont dépendent, sur chacun de ses côtés d'accostage (28,30), deux lèvres périphériques (88,90 ; 92,94) distantes l'une de l'autre.

4. - Dispositif selon l'une des revendications 1 à 3, caractérisé en ce que le cadre d'accostage (26) a une forme générale rectangulaire définie par deux barrettes longitudinales (78,80) reliées entre elles par deux barrettes transversales (82,84).

5. - Dispositif selon la revendication 4, caractérisé en ce que le cadre d'accostage (26) comprend deux pattes de fixation (100,102) prévues sensiblement aux deux extrémités d'une diagonale du rectangle.

6. - Dispositif selon l'une des revendications 1 et 2, caractérisé en ce que chaque demi-coquille (38,40) comprend un tronçon de paroi (54,58) disposé du côté opposé à la demi-ouverture latérale (44,48) de sorte que, lorsque les deux demi-coquilles sont réunies, les deux tronçons de parois forment ensemble une paroi se raccordant avec la paroi inférieure (14), la paroi supérieure (16) et les deux parois latérales (18 et 20) du boîtier (12).

7. - Dispositif selon la revendication 1, caractérisé en ce que l'une (20) des deux parois latérales du boîtier comporte une entrée d'air (60) pour l'admission d'air recyclé.

8. - Dispositif selon la revendication 1, caractérisé en ce que la paroi de fond (14) comprend au moins une entrée d'air (62,64) pour l'admission d'air recyclé.

9. - Dispositif selon la revendication 1, caractérisé en ce que la paroi supérieure (16) du boîtier (12) comprend au moins une entrée d'air (74,76) pour l'admission d'air extérieur.

10. - Dispositif selon la revendication 9, caractérisé en ce que la paroi supérieure (16) existe en deux versions différentes (16,16') correspondant respectivement aux deux configurations du boîtier.

# FIG.1

# FIG.2

# FIG.3

# FIG.4

# FIG.7

# FIG.8

# FIG.9

7

FIG.5

FIG.6

Office européen
des brevets

**RAPPORT DE RECHERCHE EUROPEENNE**

Numero de la demande

EP    91 40 1895

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | PATENT ABSTRACTS OF JAPAN vol. 13, no. 143 (M-811)(3491) 07 avril 1989, & JP-A-63 306914 (HITACHI) 14 décembre 1988, * le document en entier * | 1, 2 | B60H1/00 F04D29/62 |
| | --- | | |
| A | PATENT ABSTRACTS OF JAPAN vol. 7, no. 41 (M-194)(1186) 18 février 1983, & JP-A-57 191499 (HITACHI SEISAKUSHO) 25 novembre 1982, * le document en entier " | 1 | |
| | --- | | |
| A | DE-A-2315571 (SIEMENS) * page 3, dernier alinéa - page 4, dernier alinéa; figure 1 " | 1 | |
| | ----- | | |

**DOMAINES TECHNIQUES RECHERCHES (Int. Cl.5 )**

B60H
F04D

Le présent rapport a été établi pour toutes les revendications

| Lieu de la recherche | Date d'achèvement de la recherche | Examinateur |
|---|---|---|
| LA HAYE | 22 AOUT 1991 | HAGEMAN M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
F : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P0402)

9